(19) Europäisches Patentamt
European Patent Office
Office européen des brevets

(11) **EP 4 644 851 A1**

(12) **EUROPEAN PATENT APPLICATION**

(43) Date of publication:
**05.11.2025 Bulletin 2025/45**

(21) Application number: **25173770.6**

(22) Date of filing: **30.04.2025**

(51) International Patent Classification (IPC):
**G01J 3/44** *(2006.01)*    **G01N 21/65** *(2006.01)*
**G01J 3/28** *(2006.01)*

(52) Cooperative Patent Classification (CPC):
**G01J 3/44; G01J 3/28; G01N 21/6408;
G01N 21/65;** G01J 2003/4424; G01N 2201/1296

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.05.2024 US 202463641268 P**

(71) Applicant: **Thermo Electron Scientific
Instruments LLC
Madison WI 53711 (US)**

(72) Inventors:
• **IRWIN, Julian
Madison (US)**
• **WILLE, Logan
Madison (US)**

(74) Representative: **Boult Wade Tennant LLP
Salisbury Square House
8 Salisbury Square
London EC4Y 8AP (GB)**

(54) **METHOD AND SYSTEM FOR RAMAN SPECTROSCOPY**

(57)    Spectrum series are generated based on acquired photons responsive to irradiating a location of a sample with multiple light pulses. The spectrum series is processed with a trained 2D neural network to generate Raman spectrum with reduced fluorescence.

FIG. 1

## EP 4 644 851 A1

## Description

FIELD OF THE INVENTION

The present description relates generally to methods and systems for analyzing spectral data, and more particularly, to analyzing spectral data acquired in Raman spectroscopy.

SUMMARY

A method for Raman spectroscopy comprises irradiating a location of a sample with multiple light pulses and acquiring photons from the sample, wherein acquiring the photons includes recording an arrival time of each photon; generating a spectrum series based on the acquired photons, wherein the spectrum series include a plurality of spectra, and each of the spectrum is constructed from photons with substantially the same arrival time from a corresponding irradiation of the light pulse; processing the spectrum series with a trained 2D neural network; and generating a Raman spectrum from the 2D neural network.

A method for Raman spectroscopy, includes receiving a spectrum series including multiple spectra acquired at a sample location, wherein each of the spectrum of the multiple spectra corresponds to a different arrival time, and wherein the multiple spectra are acquired by irradiating the sample location with multiple light pulses and acquiring photons from the sample, wherein acquiring the photons includes recording an arrival time of each of the photons; processing the spectrum series with a trained 2D neural network; and generating a Raman spectrum from the trained 2D neural network.

A microscopy system comprises a detector; a pulsed laser for generating light pulses; a sample holder for positioning a sample; and a controller includes a processor and non-transitory memory for storing computer readable instructions, by executing the instructions in the processor, the microscopy system is configured to: irradiate a location of a sample with multiple light pulses with the laser and acquire photons from the sample with the detector, wherein acquiring the photons includes recording an arrival time of each photon from a corresponding irradiation of the light pulse; generate a spectrum series based on the acquired photons, wherein the spectrum series include a plurality of spectra, wherein each of the spectrum is constructed from photons have substantially the same arrival time; process the spectrum series with a trained 2D neural network; and generate a Raman spectrum from the 2D neural network.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

BRIEF DESCRIPTION OF THE DRAWINGS

FIG. 1 illustrates a configuration of the system for Raman spectroscopy, according to some embodiments.

FIG. 2 illustrates the wavelength selection element and the detector of FIG. 1, according to some embodiments.

FIG. 3 illustrates time characteristics of the laser pulse, the fluorescence signal and the Raman signal.

FIG. 4 shows an example spectrum series.

FIG. 5A illustrates the Raman components of the training data.

FIG. 5B illustrates the fluorescence components of the training data.

FIG. 6 is a flowchart for processing the spectrum series using 2D neural network, according to some embodiments.

FIG. 7 shows the measured spectrum and the output spectrum from a trained neural network.

DETAILED DESCRIPTION

Raman spectroscopy is a spectroscopic technique that may be used to characterize and determine composition of a sample. Fluorescence background is a common issue in Raman spectroscopy. When a sample is illuminated with light, it can produce both Raman scattering and fluorescence. Because the probability of Raman scattering is much lower than that of fluorescence, the detected fluorescence signal can be so strong that they overwhelm the weaker Raman signal (detected Raman scattering). This strong fluorescence background reduces the signal-to-noise ratio (SNR) of the Raman signal and introduces errors in material identification and quantitative measurement.

There are several methods for reducing the fluorescence background in Raman spectroscopy. For example, light with a longer wavelength may be used for illumination/excitation. However, Raman signal strength decreases with longer wavelength. In another method, the fluorescence background may be reduced by collecting scattered light from the sample via time-correlated single-photon counting (TCSPC), such as by using a detector of Single Photon Avalanche Diode (SPAD) array. SPAD is an emerging technology that promises to match or exceed the sensitivity of mature technologies such as CCD (Charge-Coupled Device) and CMOS (Complementary Metal-Oxide-Semiconductor), while additionally providing the arrival times of each detected photon on a picosecond scale. By using SPAD array as the detector, spectral data can be acquired with zero read noise. Moreover, the time-resolved detection provided opportunities for fluorescence suppression and/or fluorescence lifetime detection. Besides SPAD, other detectors, such as Photomultiplier Tubes (PMTs), Hybrid Photodetectors (HPDs), intensified CCDs, gated CMOS, and Kerr gated detectors may be used for TCSPC.

The following description relates to systems and methods for Raman spectroscopy, and more particularly, relating to using neural network for removing fluorescence background in Raman spectroscopy.

In some examples, the method includes receiving a spectrum series including a plurality of spectra, wherein each spectrum of the spectrum series corresponds to a different arrival time. The arrival time of a photon at the detector is relative to the generation of the corresponding light pulse that causes the emission of the photon from the sample. The generation of the light pulse, or zero arrival time, may be the time point that the detector detected the laser pulse or the time point that an electrical signal related to the generation of the light pulse is received by the detector. For example, the electrical signal may be an electrical triggering pulse for generating the light pulse, or an electrical sync pulse generated by the detector electronics to trigger the laser. To enhance the signal to noise ratio, the spectrum series may be obtained by integrating the detected sample light responsive to irradiating the sample location with multiple light pulses. In one example, a spectrum series at one sample location is acquired by irradiating the sample with $10^4$ to $10^{10}$ light pulses. The spectrum series is processed with a trained 2D neural network. A Raman spectrum is generated from the trained 2D neural network. The term Raman spectrum refers to a spectrum of Raman signal that include sample specific Raman signatures.

In other examples, the method for Raman spectroscopy includes irradiating a location of a sample with multiple light pulses and acquiring photons from the sample responsive to the irradiation, wherein acquiring the photons includes recording the arrival times of the photons; generating a spectrum series based on the acquired photons, wherein the spectrum series include a plurality of spectra, wherein each of the spectrum is constructed from photons have substantially the same arrival time; processing the spectrum series with a trained 2D neural network; and generating a Raman spectrum from the trained 2D neural network.

The light beam may be a light pulse with a pulse duration of less than a nanosecond. In some examples, the light pulse is provided by a laser, and the duration of the light pulse is less than 100 picoseconds. In some examples, the light pulse is generated by a picosecond pulsed laser.

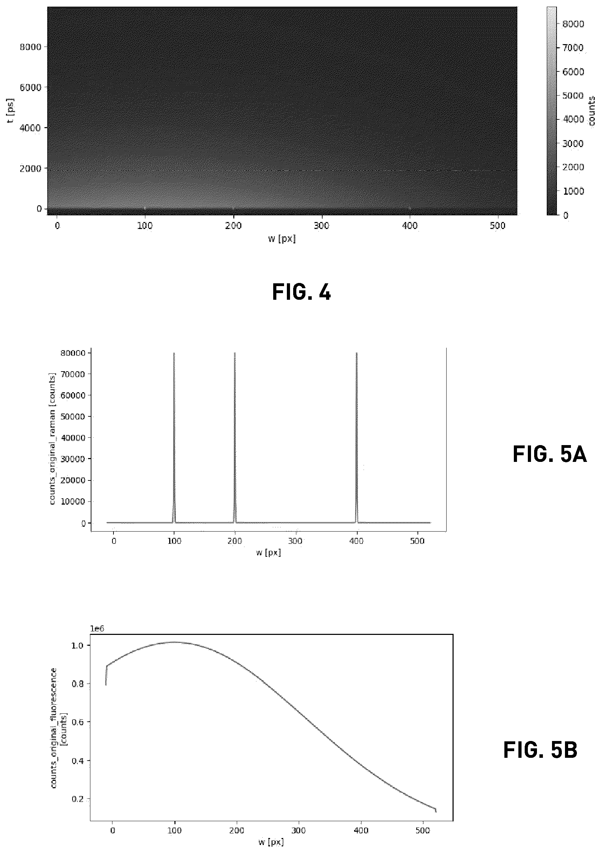

The spectrum series include multiple spectra, wherein each of the spectrum corresponds to different arrival times of the photons at the detector. A spectrum series is a two-dimensional dataset. For example, the spectrum series may be represented by a M by N data array, wherein M is the number of time points or time bins, and N is the number of spectral points (or wavelength/wavenumbers) of each spectrum (or the length of the spectrum). FIG. 4 illustrates one spectrum series. The arrival times that belong to the same time point or time bin are herein considered to have the same arrival times. The time point or time bin corresponds to the time resolution for acquiring the sample light. The time resolution may be less than 50 picoseconds.

The multiple spectra in the spectrum series are generated from the detected photons scattered or emitted from the same sample location responsive to irradiating the sample with the light pulse. The photons are detected and recorded for a time period after irradiating the sample location with each light pulse. The time period is shorter than the duration between consecutive light pulses. The spectrum series may include a first portion of spectra with an earlier arrival time and a second portion of spectra with a later arrival time. The first portion may include both fluorescence signal and Raman signal, and the second portion may include only the fluorescence signal.

The spectrum series is processed using a trained 2D neural network (NN) to remove the fluorescence signal (i.e., fluorescence background) from the detected signal. The trained 2D NN intakes one spectrum series and outputs/generates a Raman spectrum with reduced fluorescence background. The 2D NN may be a convolutional neural network (CNN). The 2D NN may be an autoencoder. The Raman spectrum is a one-dimension signal, and the length of the Raman spectrum is the same as at least one dimension of the spectrum series. For example, the output Raman spectrum is a one-dimension data with length of N. As such, the trained 2D NN does not change the resolution or the spectral range of the spectral data during the processing. The trained 2D NN acts as a filter that removes the fluorescence background from the Raman signal.

The trained 2D NN may be generated by training a 2D NN using either simulated and/or experimental data. The training data include multiple training spectrum series and the corresponding Raman spectra. The training spectrum series may be generated from pure Raman spectrum, fluorescence background, and time profile of the light pulse. The pure Raman spectra are the Raman spectra of known substances, without the fluorescence background. The pure Raman spectrum may be obtained from a library. The fluorescence background (or pure fluorescence spectra) are the fluorescence spectra of known substances, without the Raman spectra. The fluorescence background may be generated based on the fluorescence lifetime of the sample. The fluorescence time of the sample may be known or measured. The fluorescence background can be generated using the exponential decay model and the fluorescence time. The time profile of the laser pulse is the intensity of the laser pulse over time, which may be experimentally measured.

In some examples, the trained 2D NN is retrained with training spectrum series that are generated based on the measured time profile of the laser. The trained 2D NN may be retrained to compensate for the parameter drift of the Raman microscopy system over time.

Sample composition may be analyzed based on the Raman spectrum output from the trained NN. For example, by comparing the Raman spectrum of the sample with reference spectra of known substances, the composition of the sample can be determined. In addition, the substances present in the sample may be quantitatively determined based on the Raman spectrum.

In some examples, a microscopy system for Raman spectroscopy includes a detector; a pulsed laser for generating light pulses; a sample holder for positioning a sample; and a controller includes a processor and non-transitory memory for storing computer readable instructions, by executing the instructions in the processor, the microscopy system is configured to: irradiate a location of a sample with multiple light pulses with the laser and acquire photons from the sample with the detector, wherein acquiring the photons includes recording an arrival time of each photon from a corresponding irradiation of the light pulse; generate a spectrum series based on the acquired photons, wherein the spectrum series include a plurality of spectra, wherein each of the spectrum is constructed from photons have substantially the same arrival time; process the spectrum series with a trained 2D neural network; and generate a Raman spectrum from the 2D neural network.

For example, the light from the sample is spatially separated based on the wavelength through a spectrograph before reaching a detector. The detector may be an array detector that can detect the photons arriving at each pixel of the array, which relate to the spectral information of the light. The detector also records the arrival time of photons relative to the light pulse that irradiated the sample. The detector may be a SPAD detector.

The microscopy system may further include a scanner for directing the light beam to different sample locations and acquire at least one spectrum series at each of the sample location. Images showing composition distribution in a sample region may be generated based on the Raman spectra from multiple sample locations.

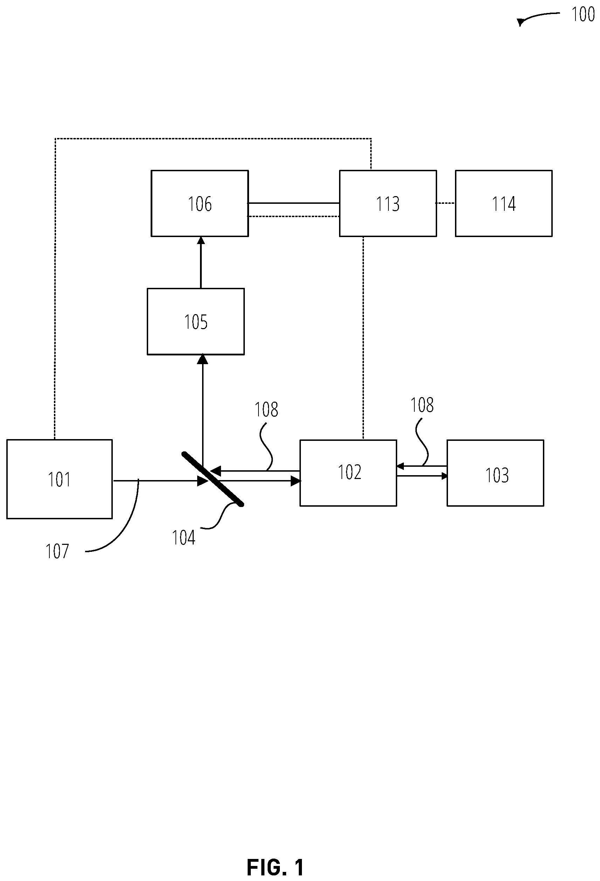

FIG. 1 shows a high-level configuration of a microscopy system, such as a Raman system, 100 for performing Raman spectroscopy. It will be appreciated that different optical architectures of Raman spectroscopy are known in the art and thus the example of FIG. 1 should not be considered as limiting.

The Raman system 100 includes light source 101, which may include a laser source, that produces a light beam 107. The laser source may be a pulsed laser that generates a light pulse. The pulse duration of the light pulse may be less than one nanosecond. The laser source may be a picosecond laser. The light beam is directed sequentially through a dichroic mirror 104 and optical assembly 102, and towards sample 103. Sample 103 may include any type of sample of interest to a user which may include substantially dry samples (e.g. a powder, solid material), substantially fluid samples (e.g. a liquid, gas), or some combination thereof (e.g. a gel).

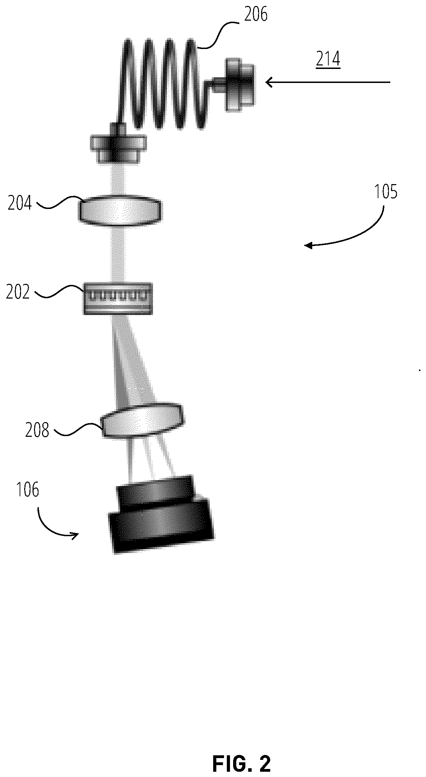

The optical assembly 102 may include a scanner and at least one objective. The scanner scans the light beam over the sample so that a sample region may be imaged. The objective focuses the light beam at a point on the sample. In response to the light irradiating the sample 103, light is scattered or emitted from the sample. The sample may be held by a sample stage (not shown). Different sample locations may be scanned by adjusting the light beam and/or the sample stage. The light 108 scattered or emitted from the sample (e.g. comprising a Raman portion, a fluorescence portion, and a Rayleigh portion of scattered light) is directed via the optical assembly 102 towards the dichroic mirror 104. The dichroic mirror 104 reflects the light 108 from the sample towards the wavelength selection element 105. The wavelength selection element selects the wavelength range of the light being detected by the detector 106. The detector 106 may be a line sensor or an array sensor. The wavelength selection element may include one or more of a filter or a monochromator. The wavelength selection element may include a spectrometer to separates the incoming light based on its spectral components, different wavelengths or colors, and projects each component onto detector 106. The detector may be a line detector or an array detector that can perform time-correlated single-photon counting. The detector may be a SPAD detector. In some examples, the detector may be Photomultiplier Tubes (PMTs), Hybrid Photodetectors (HPDs), intensified CCDs, gated CMOS, and Kerr gated detectors. An example of the wavelength selection element 105 and detector 106 is shown in FIG. 2.

Signal processing and/or digitizing of signals associated with the scattered light that is received by the detector 106 can be handled by an electrical signal processor or controller 113. In some implementations, the controller 113 may be a suitably programmed microprocessor or application specific integrated circuit including a read-only or read-write memory of any known type which holds computer readable instructions and data for spectrometer operation as described herein. The controller may further control one or more of the light source 101, one or more components of optical assembly 102, and detector 106. An input/output device may be connected with the controller for receiving user instructions and/or displaying data to the user.

FIG. 2 shows an example of the wavelength selection element 105 and detector106. The wavelength selection element includes a spectrometer 202, such as a volume holographic grating. The wavelength selection element 105 may further include a lens 208 for focusing the spatially separated light from the spectrometer 202 onto detecting elements of the detector 106. The wavelength selection element 105 may include a beam limiting device 206 such as an optical fiber or input split to direct the light 214 from the sample to the spectrometer 202. In the case that the beam limiting device is the optical fiber, it also functions as an optical guide to direct the light to the spectrometer. A lens 204 may be positioned between the beam limiting device 206 and the spectrometer 202 for directing the light to the spectrometer 202.

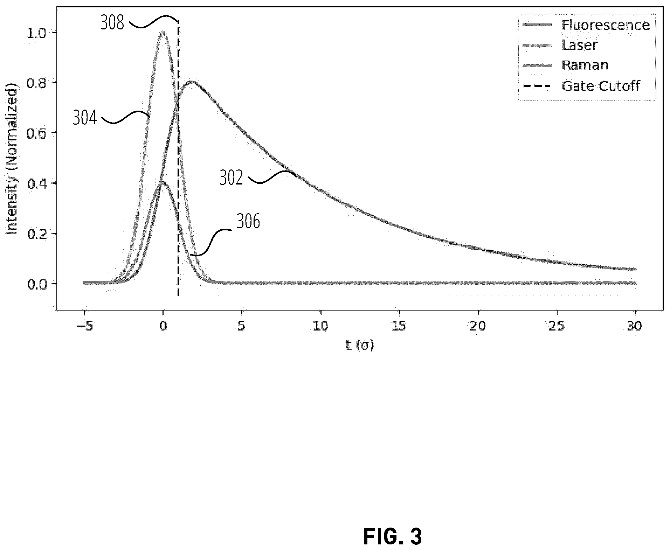

FIG. 3 illustrates the timing of the fluorescence signal 302 and the Raman signal 306 relative to the laser pulse 304. The laser pulse 304 is the Rayleigh scattering the light pulse irradiated the sample. The x-axis is the time in the unit of $\sigma$, which is the full-width-half-max (FWHM) of the time profile of the laser pulse 304. The y-axis is the normalized intensities of the various signals. The origin of the x-axis (t=0) is when the peak of the laser pulse hits the detector, or the time point that the detector detects the laser pulse. The x-axis thus represents the arrival time.

After irradiating the sample with a light pulse. Both Raman signal 306 and the fluorescence signal 302 are substantially generated instantaneous and therefore overlaps in time with the laser pulse 304. The time profile of the Raman signal 306 substantially matches the shape of the time profile of the laser pulse 304. For example, as shown in FIG. 3, a Gaussian time profile of the laser pulse will produce an overlapping gaussian Raman signal. Fluorescence signal 302 decays exponentially with a sample dependent lifetime $\tau$, so some fluorescence emission overlaps in time with the Rayleigh scattering of the laser pulse and the Raman signal, but most of fluorescence emission occurs afterwards. The Gaussian time profile of the laser pulse is shown here as an example. The time profile of the laser pulse may have other shapes. In some examples, the time profile of a laser may change over time and thus need to be re-calibrated or measured.

The first portion of the spectrum series, such as from zero to $4\sigma$, includes both the fluorescence signal and the Raman signal, wherein the majority of the first portion of the spectrum series may be Raman signal. The second, later, portion of the spectrum series, such as from $4\sigma$ to $30\sigma$, includes the majority of the fluorescence signal and a small portion of the Raman signal. The fluorescence signal 302 needs to be removed from the detected spectra data to yield the Raman signal 306.

One way to separate the fluorescence signal from the Raman signal is via time gating, wherein a detector with a defined cutoff time 308, usually tens or hundreds of picoseconds after the laser pulse. All photons before the cutoff are kept as signal photons, and all photons after the cutoff are discarded as background photons.

Another way to separate the fluorescence signal from the Raman signal is disclosed herein, using TCSPC, wherein the arrival times of each photon are measured and recorded with a time resolution of $\Delta t$. After measuring the emissions from a plurality of laser pulses, a TCSPC detector yields a plot of emission versus time (arrival time). Classical methods for the separation of TCSPC data into Raman and fluorescence components include deconvolution and principal component analysis. Herein, the fluorescence signal is separated from the Raman signal using a trained 2D NN. By using the NN, the fluorescence background may be more effectively or completely removed from the detected signals without reducing the SNR of Raman signals.

FIG. 4 illustrates an example of one spectrum series. The y axis is time (or arrival time), wherein the origin (t=0) corresponds to the time point that the laser pulses are arrived/received at the detector. The x-axis is the wavelength (or wavenumber/energy). The x-axis may alternatively be represented in the number of detector pixels. Each time along the y-axis corresponds to a spectrum along the x axis. The spectrum series includes spectra acquired at a time resolution determined by the detector. The amplitude of each pixel in FIG. 4 corresponds to the photon counts (or signal intensity) received at a particular detector pixel (or a particular wavelength). At arrival time near t=0, three peaks are presented, which correspond to the peaks of the fluorescence signal, the Raman signal, and the scattered laser light.

One spectrum series at a sample location is acquired after irradiating the sample location with multiple light pulses. The photons scattered or emitted from the sample are collected by a pixelated detector. A pixel of the detector can measure one photon per light pulse. The detector records the pixel location that received the photon, as well as the time that the photon arrived at the detector. The arrival time of each detected photon relative to the corresponding laser pulse may then be calculated and used to stack the spectral data collected from the sample location into one spectrum series.

After acquiring spectral data at one sample location, the relative position of the sample and light beam may be adjusted (by scanning the beam and/or translating the sample), so that spectral data from another sample location can be acquired.

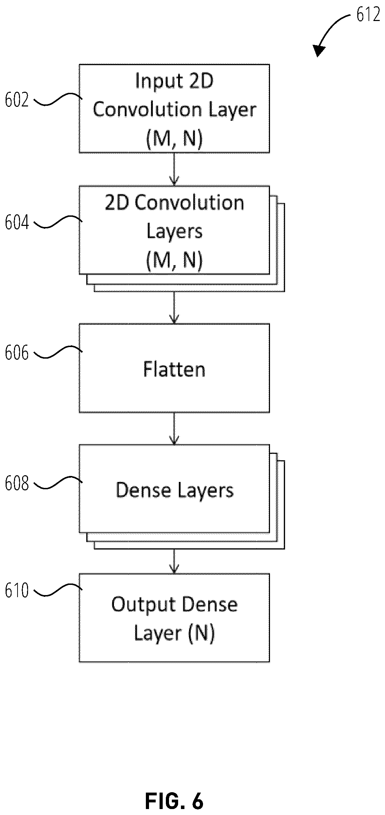

FIG. 5A and FIG. 5B show some aspects of the training data for training the 2D NN (such as the 2D NN shown in FIG. 6). The training data include multiple spectrum series and the corresponding Raman spectra. The training data may be simulation data, experimental data, or data generated based on both simulation and experimental data.

In one example, the training data may be generated from simulation, based on the pure Raman spectrum, and the pure fluorescence spectrum. The pure Raman spectrum is the spectrum only from Raman scattering, without fluorescence components. The pure Raman spectrum can be obtained from libraries of known Raman spectra (or Raman peaks). The pure fluorescence spectrum is the spectrum only from fluorescence, without Raman components. The pure fluorescence spectrum can be generated from known fluorescence lifetime. FIG. 5A shows the simulated pure Raman spectrum, which includes three Raman peaks. FIG. 5B shows the pure fluorescence spectrum. The fluorescence spectrum has a broad peak and long decay after the peak, comparing to the Raman spectrum.

The spectrum series for training may be reconstructed from the pure Raman spectrum, the pure fluorescence spectrum, and the characteristics of the laser pulse. The characteristics of the laser pulse includes the time signatures of the laser pulse . For example, the characteristics of the laser pulse includes one more of the profile of the time profile of the laser pulse, the pulse shape (i.e., the spatial distribution of the laser pulse), and the pulse duration. The simulated training data is constructed to closely resemble the actual data, including matching the laser pulse's time profile and detector noise/baseline, and the shapes of the Raman peaks.

In one example, the spectrum series can be generated via simulation based on the known pure Raman spectrum, the time profile of the laser pulse, and the known fluorescence lifetime. For example, assuming the laser pulse profile in time has a Gaussian shape $\mathscr{L}(t)$, shown in Equation 1, wherein $\sigma$ is the variance of the laser pulse in time and $t$ is time. The pulse profile of the Raman emission in time will match the laser pulse. Therefore, the Gaussian laser pulse profile produces an overlapping Gaussian Raman pulse profile. The simulated Raman emission at various wavelengths over time can be obtained by scaling the laser pulse profile in time $\mathscr{L}(t)$ with the known pure Raman spectrum (or Raman signature) of certain sample compositions.

$$\mathscr{L}(t;\sigma) = \frac{1}{\sqrt{2\pi\sigma^2}}e^{-\frac{t^2}{2\sigma^2}} \qquad\qquad \text{Equation 1}$$

Fluorescence decays exponentially with a sample composition dependent lifetime $\tau$, as shown in Equation 2. The simulated fluorescence signal at a certain wavelength in time $F(t)$ can be obtained based on Equation 3, from the convolution of the laser pulse shape $\mathscr{L}(t)$ with the fluorescence decay $\mathscr{F}(t)$. The simulated fluorescence emission at various wavelengths over time can be calculated by scaling the fluorescence signal in time $F(t)$ with the pure Raman spectrum.

$$\mathscr{F}\left(t\right) = \begin{cases} 0, & t < 0 \\ e^{-\frac{t}{\tau}}, & t \geq 0 \end{cases} \qquad\qquad \text{Equation 2}$$

$$F\left(t\right) = \int_{-\infty}^{\infty} \mathscr{L}\left(t - t\prime\right) {}^* \mathscr{F}\left(t\right) dt\prime \qquad\qquad \text{Equation 3}$$

In some examples, the training data can be generated from experimental data, wherein the acquired spectrum series is processed with other fluorescence reduction methods to obtain the pure Raman spectrum and the pure fluorescence spectrum for training. The 2D NN can be trained using the training data in the factory. The trained NN can then be stored in the Raman spectroscopy system for processing the user acquired spectrum series.

In one example, the 2D NN can be trained with both simulated and experimental data. A trained 2D NN may be first generated using simulated data as described above. Then, transfer learning can be used. In transfer learning, an already trained general model is retrained on a second, smaller training data of interest comparing to the simulated training data. The second training data is obtained based on measurement data from sample. In one example, the second training data is experimental labelled data, where the labels (pure Raman spectra) are generated by classical fitting methods (such as background subtraction method or fitting method). In another example, the second training data may be obtained by exciting a sample with multiple laser colors, and one wavelength causes fluorescence from sample and one wavelength doesn't. In another example, the second training data is acquired with another fluorescence reduction technique like Kerr gating or stimulated emission depletion. In yet another example, the second training data is generated with measurements from a pure sample for Raman spectra, and measurements from the same sample dosed with fluorescent substances. Retraining of the trained 2D NN may be done by the user with samples with composition similar to the sample of interest.

FIG. 6 illustrates an example procedure of processing the spectrum series using a trained neural network 612. The neural network 612 is a 2D neural network operates on two-dimensional data input from 602. The 2D neural network includes 2D convolution layers 604, flatten layer 606, and dense layers 608.

The input data is processed by the 2D Convolution Layers 604. These are the initial layers of the network that accept a M by N input (where M and N represent the dimensions of the input data). The input data is one spectrum series, such as the spectrum series shown in FIG. 4. In one example, M is the time and N is the wavenumber. Each convolution layer may use a set of learnable filters, which are small spatially (along width and height), but extend through the full depth of the input volume. During the forward pass, each filter is convolved across the width and height of the input volume, computing the dot product between the entries of the filter and the input and producing a 2-dimensional activation map. These maps are then stacked along the depth dimension to produce the output volume.

Data output from the 2D convolution layers 604 is input to the flatten layer 606. After passing through one or more 2D convolution layers, the output is a 3D tensor. The 3D tensor is flattened into a 1D tensor before it can be passed to the dense layers 608. The flatten operation takes the 3D tensor and reshapes it into a 1D tensor by aligning the elements along one axis.

The 1D data output from the flatten layer is then input to the dense layers 608, also known as fully connected layers. The dense layers connect every neuron in one layer to every neuron in the next layer. The first dense layer will have an input size equal to the number of elements in the flattened tensor. The final dense layer will have a size of N, representing the desired output of the network. Each neuron in a dense layer computes the dot product of the input and its weights, adds the bias and then applies an activation function. The final dense layer is output as the result of the 2D neural network at step 610.

In some embodiments the spectral series may be a 2D vector of size 128x22, with 128 spectral bins and 22 time bins which forms the input to a convolutional neural network (CNN) model. The 2D CNN model with a first layer that may consist of a convolution layer containing 32 filters of size 3x2 with a rectified linear (ReLU) activation function, the second layer may consist of a convolution layer containing 32 filters of size 4x3 with a ReLU activation function, the third layer may consist of a convolution layer containing 64 filters for size 6x3 with a ReLU activation function, the fourth layer may consist of flatten layer, the fifth layer may consist of a Dense layer with 128 nodes with a ReLU activation function, and the final layer may consist of a dense layer with 128 nodes the same dimension as the spectral dimension of the input. This model may be trained with a Adam learning schedule with learning rate of $10^{-4}$ and a loss function of mean squared error over 100 epochs of training with the training data split into batches of 32 spectrum series.

As such, the 2D convolution layers are responsible for extracting features from the input data, the flatten layer reshapes the 3D output of the convolution layers into a 1D tensor, and the dense layers make the final predictions based on these features. The dimension (N) of the output of the trained neural network is the same as the dimension of the spectrum series which represents the wavenumber. The neural network 612 is trained based on training data so that the parameters of the 2D convolution layers 604 and the dense layers 608 are identified. By processing the spectrum series using the trained neural network, the fluorescence signals may be removed while preserving the Raman signals in the detected spectral data received by the detector.

Though the trained NN presented herein is a CNN , 2D NN with other architectures, such as encoder and decoder or autoencoder networks may be used.

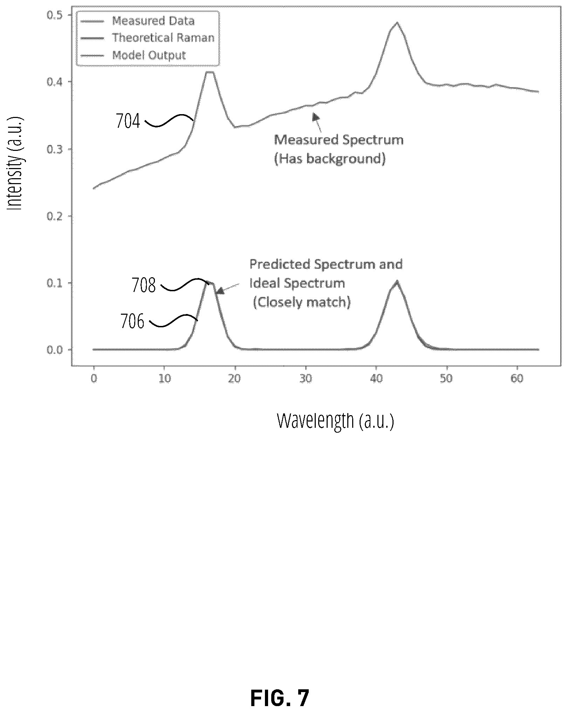

FIG. 7 illustrates the spectrum series and the output of the trained 2D NN. The x-axis is the pixel number of the detector, which can be converted to wavelength. The y-axis is the signal intensity in arbitrary units. Trained 2D NN in this example was generated by training the 2D CNN shown in FIG. 6 using 64,000 simulated spectrum series. The dimension of the spectrum series was 22 by 64, which corresponded to 22 time points (y axis in FIG. 4) and 64 pixels (x axis in FIG. 4). Plot 704 is the simulated measured spectrum series summed over time. The simulated measured spectrum series was not used in training the 2D NN. Plot 706 is the 1D output (Raman spectrum) of the trained NN generated after processing the simulated measured spectrum series, as well as the theoretical Raman spectrum. The NN output closely matches the theoretical Raman spectrum 708. The fluorescence components were successfully removed from the spectral data, as the baseline of Plot 706 is a nearly flat line close to zero intensity.

The methods and systems provided here provides a way to remove fluorescence from the Raman signals in Raman spectroscopy. Comparing to the existing time gating method, background subtraction method, or classical fitting method, using a trained 2D NN can outperform these methods. Unlike time gating, the NN method can learn the details of the different time dependence of the Raman and fluorescence signals and use that dependence to separate the signals. This can result in a higher fidelity processed Raman spectrum. Further, in additional to removing the fluorescence background, the trained 2D NN may remove time skew error in the detected spectral data. The time skew error is caused by the different pixel time clocks of the pixelated detector. The time skey error cannot be removed from the other methods.

Example 1: A method for Raman spectroscopy, comprises: irradiating a location of a sample with multiple light pulses and acquiring photons from the sample, wherein acquiring the photons includes recording an arrival time of each of the photons; generating a spectrum series based on the acquired photons, wherein the spectrum series include a plurality of spectra, and each spectrum of the plurality of spectra is constructed from photons with the same arrival time from a corresponding irradiation of the light pulse; processing the spectrum series with a trained 2D neural network; and generating a Raman spectrum from the trained 2D neural network.

Example 2: The method of example 1, wherein a portion of the plurality of spectra acquired at an earlier arrival time include both a Raman signal and a fluorescence signal, and a portion of the plurality of spectra acquired at a later arrival time do not include the Raman signal.

Example 3: The method of any of Examples 1-2, wherein processing the spectrum series with the trained 2D neural network and generating the Raman spectrum from the trained 2D neural network includes removing the fluorescence signal from the spectrum series and generating the Raman spectrum with the trained 2D neural network.

Example 4: The method of any of Examples 1-3, further comprising generating the trained 2D neural network by training a 2D neural network with training data including multiple training spectrum series.

Example 5: The method of any of Examples 1-4, further comprising generating the training spectrum series based on pure Raman spectra and pure fluorescence spectra.

Example 6: The method of any of Examples 1-5, further comprising generating the training spectrum series further based on one or more characteristics of the light pulses.

Example 7: The method of any of Examples 1-6, wherein the one or more characteristics of the light pulses include a time profile of an intensity of the light pulses.

Example 8: The method of any of Examples 1-7, wherein generating the trained 2D neural network further includes, training the 2D neural network first with a simulated training spectrum series, and then training the 2D neural network with an experimentally obtained training spectrum series.

Example 9: The method of any of Examples 1-8, further comprising determining a composition of the sample based on the Raman spectrum.

Example 10: The method of any of Examples 1-9, wherein determining the composition of the sample based on the Raman spectrum includes determine the composition using a second neural network.

Example 11: The method of any of Examples 1-10, wherein the trained 2D neural network is a convolutional neural network or an autoencoder.

Example 12: The method of any of Examples 1-11, wherein the spectrum series is a 2D dataset, wherein a length of the Raman spectrum is the same as at least one dimension of the spectrum series.

Example 13: The method of any of Examples 1-12, wherein acquiring photons from the sample includes acquiring the photons via time-correlated single-photon counting.

Example 14: The method of any of Examples 1-3, further includes obtaining the trained 2D neural network with a training data, and generating the training data based on a time profile of an intensity of the light pulse.

Example 15: The method of any of Examples 1-14, further comprising generating the training data based further on a pure Raman spectrum from a library and a fluorescence lifetime.

Example 16: The method of any of Examples 1-15, further includes obtaining a time profile of an intensity of the light pulse, and re-training the trained 2D neural network based on the time profile.

Example 17: A method for Raman spectroscopy, includes: receiving a spectrum series including multiple spectra acquired at a sample location, wherein each of the spectrum of the multiple spectra corresponds to a different arrival time, and wherein the multiple spectra are acquired by irradiating the sample location with multiple light pulses and acquiring photons from the sample, wherein acquiring the photons includes recording an arrival time of each of the photons; processing the spectrum series with a trained 2D neural network; and generating a Raman spectrum from the trained 2D neural network.

Example 18: A microscopy system, comprises: a detector; a pulsed laser for generating light pulses; a sample holder for positioning a sample; and a controller includes a processor and non-transitory memory for storing computer readable instructions, by executing the instructions in the processor, the microscopy system is configured to: irradiate, via the pulsed laser, a location of the sample with multiple light pulses and acquire, via the detector, photons from the sample, wherein acquiring the photons includes recording an arrival time of each of the photons from a corresponding irradiation of the light pulse; generate a spectrum series based on the acquired photons, wherein the spectrum series include a plurality of spectra, wherein each spectrum of the plurality of the spectra is constructed from photons with the same arrival time; process the spectrum series with a trained 2D neural network; and generate a Raman spectrum from the trained 2D neural network.

Example 19: The microscopy system of example 18, wherein the detector is a single-photon avalanche diode detector.

Example 20: The microscopy system of Example 18 or Example 19, further includes a scanner for directing the light pulses to different sample locations of the sample.

## Claims

1. A method for Raman spectroscopy, comprises:

   irradiating a location of a sample with multiple light pulses and acquiring photons from the sample, wherein acquiring the photons includes recording an arrival time of each of the photons;
generating a spectrum series based on the acquired photons, wherein the spectrum series include a plurality of spectra, and each spectrum of the plurality of spectra is constructed from photons with a same arrival time from a corresponding irradiation of the light pulse;
processing the spectrum series with a trained 2D neural network; and
generating a Raman spectrum from the trained 2D neural network.

2. The method of claim 1, wherein a portion of the plurality of spectra acquired at an earlier arrival time include both a Raman signal and a fluorescence signal, and a portion of the plurality of spectra acquired at a later arrival time do not include the Raman signal.

3. The method of claim 2, wherein processing the spectrum series with the trained 2D neural network and generating the Raman spectrum from the trained 2D neural network includes removing the fluorescence signal from the spectrum series and generating the Raman spectrum with the trained 2D neural network.

4. The method of claim 1, further comprising generating the trained 2D neural network by training a 2D neural network with training data including multiple training spectrum series.

5. The method of claim 4, further comprising generating the training spectrum series based on pure Raman spectra, pure fluorescence spectra, and one or more characteristics of the light pulses.

6. The method of claim 5, wherein the one or more characteristics of the light pulses include a time profile of an intensity of the light pulses.

7. The method of claim 4, wherein generating the trained 2D neural network further includes, training the 2D neural network first with a simulated training spectrum series, and then training the 2D neural network with an experimentally obtained training spectrum series.

8. The method of any of claims 1-7, further comprising determining a composition of the sample based on the Raman spectrum.

9. The method of claim 8, wherein determining the composition of the sample based on the Raman spectrum includes determine the composition using a second neural network.

10. The method of any of claims 1-9, wherein the trained 2D neural network is a convolutional neural network or an autoencoder.

11. The method of any of claims 1-10, wherein the spectrum series is a 2D dataset, wherein a length of the Raman spectrum is the same as at least one dimension of the spectrum series.

12. The method of any of claims 1-11, wherein acquiring photons from the sample includes acquiring the photons via time-correlated single-photon counting.

13. The method of claim 1, further includes obtaining the trained 2D neural network with a training data, and generating the training data based on a time profile of an intensity of the light pulse.

14. A microscopy system, comprises:

a detector;
a pulsed laser for generating light pulses;
a sample holder for positioning a sample; and
a controller includes a processor and non-transitory memory for storing computer readable instructions, by executing the instructions in the processor, the microscopy system is configured to:

irradiate, via the pulsed laser, a location of the sample with multiple light pulses and acquire, via the detector, photons from the sample, wherein acquiring the photons includes recording an arrival time of each of the photons from a corresponding irradiation of the light pulse;
generate a spectrum series based on the acquired photons, wherein the spectrum series include a plurality of spectra, wherein each spectrum of the plurality of the spectra is constructed from photons with the same arrival time;

process the spectrum series with a trained 2D neural network; and

generate a Raman spectrum from the trained 2D neural network.

15. The microscopy system of claim 14, wherein the detector is a single-photon avalanche diode detector.

100

| | | |
|---|---|---|
| 106 | 113 | 114 |

| 105 |
|---|

108

108

| 101 |
|---|

104

107

| 102 |
|---|

| 103 |
|---|

**FIG. 1**

206

214

105

204

202

208

106

**FIG. 2**

**FIG. 3**

**FIG. 4**

**FIG. 5A**

**FIG. 5B**

612

```
602 ──  ┌─────────────────────┐
         │   Input 2D          │
         │ Convolution Layer   │
         │     (M, N)          │
         └─────────────────────┘
                   │
                   ▼
604 ──  ┌─────────────────────┐
         │   2D Convolution    │
         │     Layers          │
         │     (M, N)          │
         └─────────────────────┘
                   │
                   ▼
606 ──  ┌─────────────────────┐
         │      Flatten        │
         └─────────────────────┘
                   │
                   ▼
608 ──  ┌─────────────────────┐
         │   Dense Layers      │
         └─────────────────────┘
                   │
                   ▼
610 ──  ┌─────────────────────┐
         │   Output Dense      │
         │     Layer (N)       │
         └─────────────────────┘
```

**FIG. 6**

**FIG. 7**

Europäisches
Patentamt

European
Patent Office

Office européen
des brevets

# EUROPEAN SEARCH REPORT

**Application Number**

EP 25 17 3770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KEKKONEN JERE ET AL: "Time- and spectrally-resolved mesoscopic Raman and fluorescence imaging of carious enamel by a CMOS SPAD-based spectrometer", 2023 IEEE INTERNATIONAL INSTRUMENTATION AND MEASUREMENT TECHNOLOGY CONFERENCE (I2MTC), IEEE, 22 May 2023 (2023-05-22), pages 1-6, XP034377559, DOI: 10.1109/I2MTC53148.2023.10176025 [retrieved on 2023-07-13] | 1-4, 7-12,14, 15 | INV. G01J3/44 G01N21/65 G01J3/28 |
| Y | * figures 1(a), 1(b), 2 * <br> * page 3, column 2 * | 1-4, 7-12,14, 15 | |
| | ----- | | |
| X | KEKKONEN JERE ET AL: "Chemical imaging of human teeth by a time-resolved Raman spectrometer based on a CMOS single-photon avalanche diode line sensor", ANALYST, vol. 144, no. 20, 1 January 2019 (2019-01-01), pages 6089-6097, XP093309485, UK ISSN: 0003-2654, DOI: 10.1039/C9AN01136F Retrieved from the Internet: URL:https://pubs.rsc.org/en/content/articlepdf/2019/an/c9an01136f> | 1-7,10, 12-15 | |
| | | | TECHNICAL FIELDS SEARCHED (IPC) |
| Y | * figures 1, 2 * | 1-7,10, 12-15 | G01J G01N |
| | ----- | | |
| | -/-- | | |

The present search report has been drawn up for all claims

| Place of search | Date of completion of the search | Examiner |
|---|---|---|
| Munich | 29 August 2025 | Parise, Berengere |

EPO FORM 1503 03.82 (P04C01)

page 1 of 2

Europäisches
Patentamt
European
Patent Office
Office européen
des brevets

## EUROPEAN SEARCH REPORT

**Application Number**

**EP 25 17 3770**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LUO RUIHAO ET AL: "Deep Learning for Raman Spectroscopy: A Review", ANALYTICA, vol. 3, no. 3, 19 July 2022 (2022-07-19), pages 287-301, XP093309591, ISSN: 2673-4532, DOI: 10.3390/analytica3030020 Retrieved from the Internet: URL:https://www.mdpi.com/2673-4532/3/3/20/pdf> * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 29 August 2025 | Parise, Berengere |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)